# EUROPEAN PATENT APPLICATION

(11) **EP 1 460 420 A1**
(43) Date of publication of application: **22.09.2004**
(21) Application number: 04002669.2
(22) Date of filing: 06.02.2004
(51) Int. Cl.: G01N 31/22

(54) **Detecting agent and detection method for a metal compound contained in a gas**

(30) Priority: 19.03.2003 JP 2003074791
(71) Applicant: JAPAN PIONICS CO., LTD., Minato-ku, Tokyo (JP)
(72) Inventor: Otsuka, Kenji, Hiratsuka-shi Kanagawa (JP); Nawa, Youji, Hiratsuka-shi Kanagawa (JP); Tayama, Tasunori, Hiratsuka-shi Kanagawa (JP)
(74) Representative: Gille Hrabal Struck Neidlein Prop Roos

(57) **Abstract**

A detecting agent for gas containing a metal compound comprises pyridylazo compound as a color transition component supported on a carrier. A detection method for detecting a metal compound contained in a gas comprises steps of bringing the gas containing the metal compound into contact with a detecting agent comprising pyridylazo compound as a color transition component supported on a carrier; and detecting a color transition of the detecting agent. According to the present invention, a sensitive detecting agent or a sensitive detection method enables to detect metal compounds contained in a gas exhausted from semiconductor manufacturing process, etc., without affected by accompanying gas like ammonia.

## Description

### TECHNICAL FIELD

The present invention relates to a detecting agent and detection method for detecting a metal compound. More particularly, the present invention relates to a detecting agent and a detection method for sensitively detecting a metal compound contained in a gas exhausted from semiconductor manufacturing process, etc.

### BACKGROUND ART

In late years, a rising demand for a gallium nitride series compound semiconductor regarding the elements such as light emitting diode or laser diode is rapidly increasing mainly in optical communication field. As a manufacturing method of gallium nitride series compound semiconductor, a chemical vapor deposition method that forms semi-conductor film of gallium nitride series compound on the surface of a substrate of sapphire, etc. set preparedly in a reaction tube by a vapor phase epitaxy, using organic metal gas of, for example, trimethylgallium, trimethylindium or trimethylaluminum, etc. as group IIIb element source, and using ammonia as nitrogen source is generally known.

When the metal compound containing these group IIIb element are used, unreacted component of the metal compound will be exhausted from the semiconductor manufacturing process in a situation where they are diluted with gas such as nitrogen, hydrogen, helium, etc., with ammonia. Because these extremely toxic metal compounds give bad influence to human organism and environment in the case where they are exhausted in atmospheric air without any treatment, it is necessary to remove them before being exhausted. Further, in the case where, for example, these metal compounds are purified by dry purifying method, a breakthrough of purification column is necessary to be detected.

Accordingly, a sensitive detecting agent or a sensitive detection method to detect a metal compound that is easy to handle or operate has been hereto now developed.

Conventionally, as a detecting agent to detect organometallic compound, Japanese Patent Application Laid-Open No. 10-19872 discloses a detecting agent employing, for example, molybdic acid or its salt, molybdic acid or its salt and cupric salt as a color transition component; and Japanese Patent Application Laid-Open No. 11-264815 discloses a detecting agent employing phenosafranine as a color transition component. Further, as a detection method for the metal compound without using detecting agent, a detection method, etc. with the use of Fourier Transformation-Infrared Analyzer (FT-IR) after partially sampling exhaust gas is generally used.

However, as for the detecting agent employing molybdic acid or its salt as the color transition component, because the color transition will be induced by contacting with ammonia, it has a disadvantage of incapability for selectively detecting metal compound except after removing ammonia in the case where it is used for detecting the metal compound among exhaust gas exhausted from the foregoing manufacturing apparatus of gallium nitride-based compound semiconductor. Moreover, as for the detecting agent employing phenosafranine as a color transition component, it has a disadvantage that the color transition is sometimes not distinguishable because the tint of the detecting agent only transit from pink to purple which is close to pink by contacting with metal compound. Furthermore, as for the detection method with the use of FT-IR, it has disadvantages not only that it requires plenty of time for analysis but also that it contains anxiety of having incapability to detect metal compound in the case where the gas to be sensed contains ammonia because each infrared absorption spectra of the metal compound and of the ammonia may coincides each other.

### SUMMARY OF THE INVENTION

Accordingly, an object of the present invention is to provide a sensitive detecting agent or a sensitive detection method enabling to detect alkylmetal compounds having 1 to 4 carbon atoms such as trimethylgallium, trimethylindium, trimethylaluminum, etc., metal compounds such as metal halides, etc., contained in a gas exhausted from semiconductor manufacturing process, etc., without affected by accompanying gas like ammonia.

As a result of intensive studies in view of the object, the inventors have found that a pyridylazo compound of 1-(2-pyridylazo)-2-naphthol, etc., employed as color transition component for detecting agent enables to sensitively and easily detect a metal compound in an exhaust gas exhausted from semiconductor manufacturing process without being affected by accompanying gas of ammonia, etc. The present invention has been accomplished based on the finding.

Namely, the present invention provides a detecting agent for a gas containing a metal compound, which comprises pyridylazo compound as a color transition component supported on a carrier.

Further, the present invention provides a detection method for detecting the metal component contained in a gas comprises steps of bringing the gas containing the metal compound into contact with a detecting agent comprising pyridylazo compound as a color transition component supported on a carrier; and detecting a color transition of the detecting agent.

### DESCRIPTION OF THE PREFERRED EMBODIMENTS

The present invention is applied to a detecting agent or a detection method to detect metal compounds in a gas containing nitrogen, hydrogen, argon, helium, etc., as a base gas exhausted from semiconductor manufacturing process, and in particular, advantageously applied with effect to detection of a metal compound in a gas containing hydrogen or ammonia.

The present invention provides a detecting agent for gas color transition component supported on a carrier. Further, the present invention provides a detection method for detecting metal component contained in a gas comprises steps of bringing the gas containing metal compounds into contact with a detecting agent comprising pyridylazo compound as a color transition component supported on a carrier; and detecting a color transition of the detecting agent.

Next, the detecting agent of the present invention will be described in detail.

A compound to be detected by the present invention is exemplified by an alkylmetal compound used for gallium nitride-based compound semiconductor such as trimethylgallium (Ga(CH₃)₃), triethylgallium (Ga(C₂H₅)₃), trimethylindium (In(CH₃)₃), triethylindium (In(C₂H₅)₃), trimethylaluminum (Al(CH₃)₃), triethylaluminium (Al(C₂H₅)₃), etc. Additionally, the compound to be detected by the present invention is also exemplified by alkylmetal compound such as dimethylzinc (Zn(CH₃)₂), diethylzinc (Zn(C₂H₅)₂), tetramethyl tin (Sn(CH₃)₄), tetraethyl tin (Sn(C₂H₅)₄), etc.

Further, metal halides such as boron trichloride (BCl₃), tungsten hexafluoride (WF₆), titanium tetrachloride (TiCl₄) etc., can be detected by the present invention other than the foregoing compounds. Furthermore, not only the foregoing metal compound contained in the material used in a semiconductor manufacturing process but also the metal halides, etc., generated in the reaction of the metal compound contained in ingredient gas in the semiconductor manufacturing process can be also detected by the present invention.

Examples of a metal in the foregoing metal compound in the present invention include boron, aluminum, titanium, vanadium, chromium, manganese, iron, cobalt, nickel, copper, zinc, gallium, zirconium, niobium, molybdenum, ruthenium, rhodium, palladium, silver, cadmium, indium, tin, antimony, lanthanum, cerium, hafnium, tantalum, tungsten, rhenium, osmium, iridium, platinum, gold, mercury, thallium, lead and bismuth. Among these, zinc, gallium, indium and tungsten are employed as particularly suitable.

In the detecting agent for the gas containing metal compounds of the present invention, a pyridylazo compound is supported by a carrier to obtain the detecting agent. Typical examples of the carrier include cellulose, silica gel, alumina, zirconia, titania, silica alumina, silica titania, etc. However, it is desirable to employ cellulose or silica gel, among these carriers, in the viewpoint of stable reservation without any transition of color for a long period. Although the form of the carrier is not particularly restricted, the specific surface area within the range of 0.1 to 400 m²/g may be usually adaptive in the case where the carrier is silica gel.

Although pyridylazo phenolic compound, pyridylazo naphthol compound or pyridylazo resorcinol compound is exemplified as the pyridylazo compound in the detecting agent of the present invention, it is preferable to employ 1-(2-pyridylazo)-2-naphthol considering the sensitive detecting ability for the metal compound and its availability. The amount of the pyridylazo compound contained in the carrier is usually 0.01 to 10 % by weight and preferably 0.05 to 2.0 % by weight. When the amount of the pyridylazo compound contained in the carrier is less than 0.1 % by weight, a disadvantage may occur that a color of the color transition component of the detecting agent is too faint to be easily detected. Further, when the amount of the pyridylazo compound contained in the carrier exceeds 10 % by weight, a disadvantage may occur that the detecting ability of the detecting agent deteriorates.

Although a process for supporting the pyridylazo compound on the carrier is not particularly restricted, it include, for example, immersing the carrier in a solution dissolved the pyridylazo compound in an organic solvent such as ethanol or the like, followed by drying; or scattering the foregoing solution while stirring over the carrier, followed by drying, etc.

Next, the detection method of the present invention will be described in detail.

In the detection method for metal compound of the present invention, the metal compounds contained in the gas exhausted from semiconductor manufacturing process and the like are detected by bringing the gas into contact with the foregoing detecting agent.

In the present invention, when the metal compound contacts with the pyridylazo chemical compound, the color of the pyridylazo compound will transits, thereby enables to detect the metal compound contained in the gas by the aid of detecting color transition of the detecting agent. For example, when the metal compound contacts with the detecting agent obtained by supporting 1-(2-pyridylazo)-2-naphthol on white silica gel, the color of the detecting agent will rapidly and sharply transit from orange to red.

The detecting agent for detecting the metal compound of the present invention is usually a solid. The detecting agents are filled, for example, in a transparent tube made of glass to obtain a detector tube, and the aimed metal compounds are detectable by absorbing a detection object gas from a gas-collecting inlet of supplying pipes and the like to the detector tube. Further, the detecting agents may be filled in a transparent tube made of glass or plastic to obtain a detector tube, installing the detector tube in by-pass pipe of the supplying pipes of detection object gas, and the aimed metal compounds are detectable by feeding the detection object gas into the detector tube. Furthermore, in the case where the detecting agents are employed for detecting a breakthrough of a purification column, they are used by deploying at a transparent inspection window provided at downstream side of a purifying agent stratum in the purification column, after the purification column or between the purifying agent strata prepared in plurals, etc.

In the case where the detecting agents are filled in the transparent tube and the tube is used by installing in by-pass pipe, or, in the case where the detecting agents are used with a purifying agent and the like, the velocity of the detection object gas to be brought into contact with the detecting agents is not particularly specified, however, it is usually settled to be about 0.01 to 100 cm/sec expressed as a superficial linear velocity (LV). The superficial linear velocity slower than 0.01 cm/sec delays the detection, and the superficial linear velocity faster than 100 cm/sec causes an anxiety of increasing pressure loss. The temperature of the detection object gas being brought into contact with the detecting agents is usually -20 to 100 °C and the pressure of the detection object gas is usually an atmospheric pressure and may be from a reduced pressure of 1 kPa (abs.) to a compressed pressure of 1 MPa (abs.).

According to the present invention, because the color of the detecting agent does not transit even under the presence of hydrogen or a basic gas such as ammonia, hydrazine and so on without having any metal in its molecular, the metal compounds in the gas containing said gas is selectively detectable with high sensitivity. Further, in the case where the metal compounds contained in a gas exhausted from semiconductor manufacturing process are purified by dry purifying method, any breakthrough of the purification column, wherein hydrogen or a basic gas without having any metals in its molecules generates as a result of a reaction between the metal compounds and a purifying agent, will be sensitively detectable.

### EXAMPLES

In the following examples are described several preferred embodiments to concretely illustrate the invention, however, it is to be understood that the invention is not intended to be limited to the specific embodiments.

### Example 1

### (Preparation of detecting agent)

After immersing 500 g of spherical silica gels having diameters of 5.0 mm and specific surface area of 230 m²/g in a solution prepared by adding 1.0 g of 1-(2-pyridylazo)-2-naphthol (PAN) as a color transition component into 1000 milliliter of ethanol, they were vacuum dried with the use of a rotary evaporator at the temperature of 80 °C, thereby detecting agents were obtained. The amount of the detecting agents contained in the silica gels was 0.2 % by weight.

### (Measurement of detection capability)

Filling 20 g of the detecting agents in a glass tube with internal diameter of 20 mm provided a detector tube. As a result of feeding a nitrogen gas containing hydrogen in an amount of 10 % into the detector tube under the conditions of 25°C, an atmospheric pressure and superficial linear velocity of 5 cm/sec, and bringing the gas into contact with the detecting agents, it was recognized that the color of the detecting agents maintained orange and did not rendered any color transition even after a pasture of 50 hours. Further, as a result of feeding a nitrogen gas containing ammonia in an amount of 10 %, or feeding a nitrogen gas containing hydrazine in an amount of 10 %, into the detector tube under the same conditions, and bringing the gas into contact with the detecting agents, it was also recognized that the color of the detecting agents maintained orange and did not rendered any color transition even after a pasture of 50 hours. Still further, as a result of feeding a nitrogen gas containing trimethylgallium in an amount of 300 ppm into the detector tube under the conditions of 25 °C, an atmospheric pressure and superficial linear velocity of 12 cm/sec, and bringing the gas into contact with the detecting agents, it was recognized that the color of the detecting agents rendered a transition from orange to red. The time until the initiation of the color transition was measured and the result is shown in Table 1.

### Example 2

The measurement of the detection capability was carried out in the same manner as Example 1 except that the detection object gas was replaced to a nitrogen gas containing trimethylgallium in an amount of 300 ppm and hydrogen in an amount of 15 %. The result is shown in Table 1.

### Example 3

The measurement of the detection capability was carried out in the same manner as Example 1 except that the detection object gas was replaced to a nitrogen gas containing trimethylgallium in an amount of 300 ppm and ammonia in an amount of 15 %. The result is shown in Table 1.

### Example 4

The measurement of the detection capability was carried out in the same manner as Example 1 except that the detection object gas was replaced to a nitrogen gas containing trimethylgallium in an amount of 300 ppm and hydrazine in an amount of 15 %. The result is shown in Table 1.

### Example 5 and Example 6

Detecting agents were prepared in similar manners as Example 1 except that the amount of the color transition component contained in silica gel was 0.05 % by weight and 0.5 % by weight respectively in Example 5 and Example 6. The measurements of the detection capability were carried out in the same manners as Example 1 except that these detecting agents were employed in Example 5 and Example 6. The results are shown in Table 1.

### Example 7

A detecting agent was prepared in a similar manner as Example 1 except that the carrier was replaced by spherical alumina. The measurement of the detection capability was carried out in the same manners as Example 1 except that the above detecting agent was employed in Example 7. The result is shown in Table 1.

### Example 8

After immersing 500 g of cellulose powders in a solution prepared by adding 1.0 mg of 1-(2-pyridylazo)-2-naphthol as a color transition component into 1000 milliliter of ethanol, they were vacuum dried with the use of a rotary evaporator, thereby obtained wet agent. After further blending the wet agent with 500 g of spherical silica gel, they were dried at the temperature of 80 °C with the use of a dryer, thereby obtained a detecting agent. The measurement of the detection capability was carried out in the same manner as Example 1 except that the above detecting agent was employed in Example 8. The result is shown in Table 1.

### Example 9

A detecting agent was prepared in a similar manner as Example 1 except that the color transition component was replaced with 4-(2-pyridylazo) resorcinol in Example 9. The measurement of the detection capability was carried out in the same manners as Example 1 except that the above detecting agent was employed in Example 9. The result is shown in Table 1. In this Example, the color of the detecting agent rendered transition from orange to reddish violet.

### Example 10 and example 11

The measurements of the detection capability were carried out in the same manners as Example 1 except that the concentration of trimethylgallium contained in the detection object gas were changed into 100 ppm and 10000 ppm respectively in Example 10 and Example 11. The results are shown in Table 1.

### Example 12 and Example 13

The measurements of the detection capability were carried out in the same manners as Example 1 except that the superficial linear velocity of the detection object gas were changed into 5 cm/sec and 30 cm/sec respectively in Example 12 and Example 13. The results are shown in Table 1.

### Examples 14 to 17

The measurements of the detection capability were carried out in the same manners as Example 1 except that the aimed detection component was replaced to trimethylindium, trimethylaluminum, diethylzinc and tungsten hexafluoride respectively in Examples 14 to 17. The results are shown in Table 1.

### Comparative Example 1

After immersing 500 g of spherical silica gels having diameters of 5.0 mm and specific surface area of 230 m²/g in an aqueous solution prepared by adding 1.0 g of copper sulfate 5 hydrate and 2.0 g of phosphomolybdic acid hydrate as a color transition component into 1000 ml of water, they were vacuum dried with the use of a rotary evaporator at the temperature of 80 °C, thereby detecting agents were obtained.

Filling 20 g of the detecting agents in a glass tube with internal diameter of 20 mm provided a detector tube. As a result of feeding a nitrogen gas containing hydrogen in an amount of 10 % into the detector tube under the conditions of 25 °C, an atmospheric pressure and superficial linear velocity of 5 cm/sec, and bringing the gas into contact with the detecting agents, it was recognized that the color of the detecting agents maintained yellow and did not rendered any color transition. However, when a nitrogen gas containing ammonia in an amount of 10% or a nitrogen gas containing hydrazine in an amount of 10% was brought into contact with the detecting agent, the color of the detecting agent rendered a transition from yellow to blue. Subsequently, although a nitrogen gas containing trimethylgallium in an amount of 300 ppm was fed to the detecting agents rendering blue under the conditions of 25 °C, an atmospheric pressure and superficial linear velocity of 12 cm/sec, and bringing the gas into contact with the detecting agents, the color of the detecting agents maintained blue and did not rendered any color transition further.

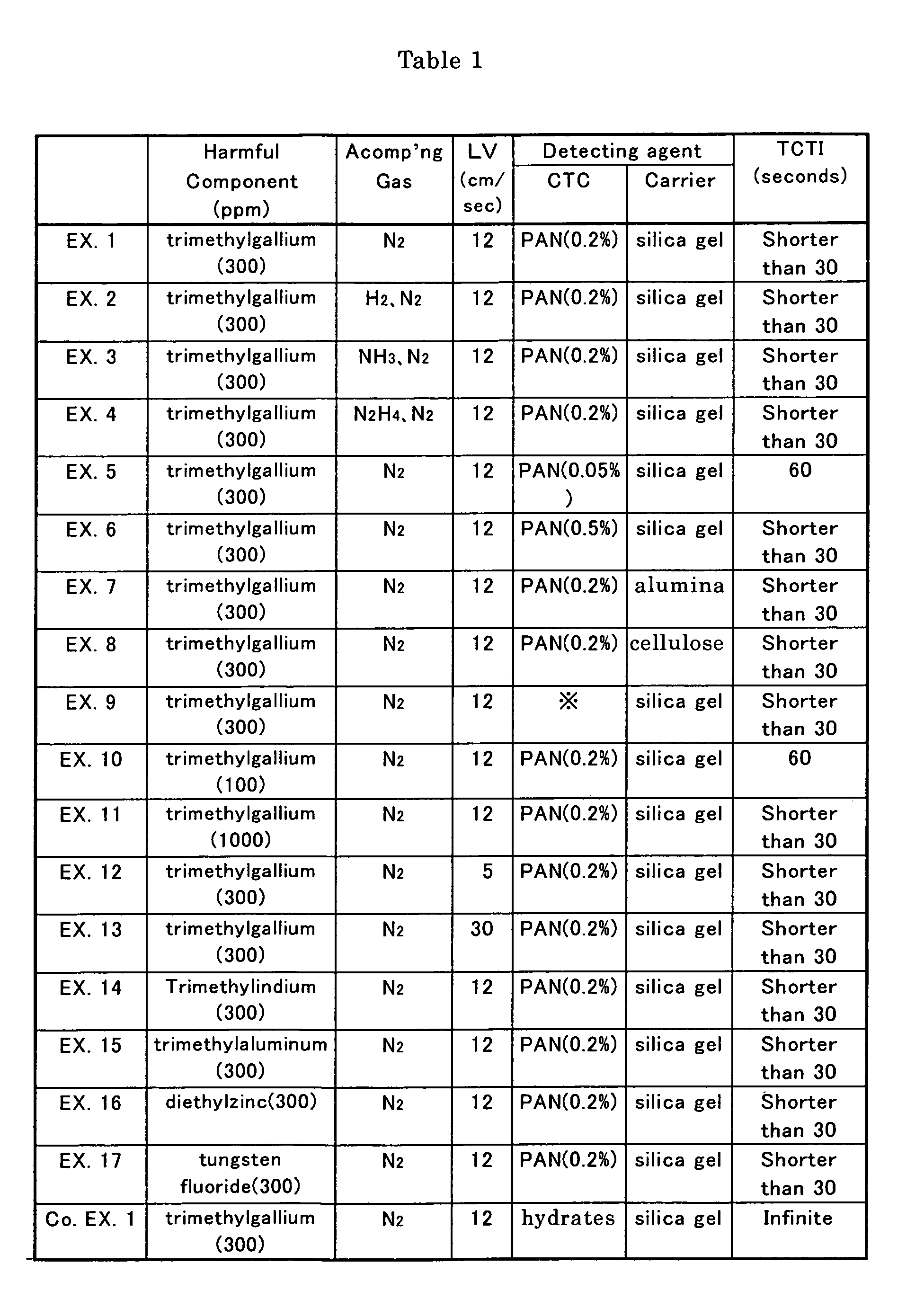

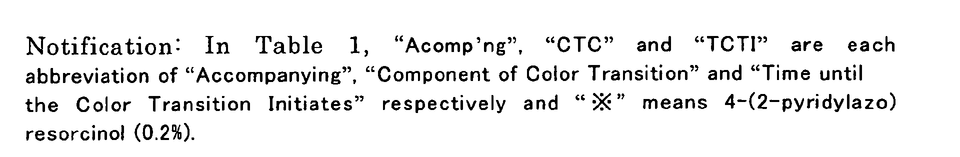

According to the present invention, a sensitive detecting agent or a sensitive detection method enabled to detect metal compounds included in gas exhausted from semiconductor manufacturing process, etc., without affected by accompanying gas like ammonia.

While there has been described what is at present considered to be the preferred embodiment of the invention, it will be understood that various modifications may be made therein, and it is intended to cover in the appended claims all such modifications as fall within the true spirit and scope of the invention.

## Claims

1. A detecting agent for gas containing metal compound, which comprises pyridylazo compound as a color transition component supported on a carrier.

2. The detecting agent according to Claim 1, wherein said pyridylazo compound is pyridylazo phenolic compound, pyridylazo naphthol compound or pyridylazo resorcinol compound.

3. The detecting agent according to Claim 1, wherein said pyridylazo compound is 1-(2-pyridylazo)-2-naphthol.

4. The detecting agent according to Claim 1, wherein said carrier is cellulose or silica gel.

5. The detecting agent according to Claim 1, wherein said metal compound is an alkylmetal compound or metal halides.

6. The detecting agent according to Claim 5, wherein said alkylmetal compound is trimethylgallium, triethylgallium, trimethylindium, triethylindium, trimethylaluminum or triethylaluminium.

7. The detecting agent according to Claim 1, wherein a metal in said metal compound is boron, aluminum, titanium, vanadium, chromium, manganese, iron, cobalt, nickel, copper, zinc, gallium, zirconium, niobium, molybdenum, ruthenium, rhodium, palladium, silver, cadmium, indium, tin, antimony, lanthanum, cerium, hafnium, tantalum, tungsten, rhenium, osmium, iridium, platinum, gold, mercury, thallium, lead or bismuth.

8. The detecting agent according to Claim 1, wherein the amount of said pyridylazo compound contained in said carrier is from 0.01 to 10 % by weight.

9. A detection method for detecting a metal compound contained in a gas comprises steps of bringing the gas containing the metal compound into contact with a detecting agent comprising pyridylazo compound as a color transition component supported on a carrier; and detecting a color transition of the detecting agent.

10. The detection method according to Claim 9, wherein said metal compound is an alkylmetal compound or metal halides.

11. The detection method according to Claim 10, wherein said alkylmetal compound is trimethylgallium, triethylgallium, trimethylindium, triethylindium, trimethylaluminum or triethylaluminium.

12. The detection method according to Claim 9, wherein a metal in said metal compound is boron, aluminum, titanium, vanadium, chromium, manganese, iron, cobalt, nickel, copper, zinc, gallium, zirconium, niobium, molybdenum, ruthenium, rhodium, palladium, silver, cadmium, indium, tin, antimony, lanthanum, cerium, hafnium, tantalum, tungsten, rhenium, osmium, iridium, platinum, gold, mercury, thallium, lead or bismuth.

13. The detection method according to Claim 9, wherein said gas further contains hydrogen.

14. The detection method according to Claim 9, wherein said gas further contains ammonia.

15. The detection method according to Claim 9, wherein said gas further contains basic gas without having any metal in its molecular.
